Europäisches Patentamt

(19) European Patent Office

Office européen des brevets

(11) Publication number: **0 181 046**
**A1**

(12) **EUROPEAN PATENT APPLICATION**

(21) Application number: **85201793.8**

(22) Date of filing: **05.11.85**

(51) Int. Cl.⁴: **A 22 B 5/00**

(30) Priority: **09.11.84 NL 8403435**

(43) Date of publication of application:
**14.05.86 Bulletin 86/20**

(84) Designated Contracting States:
**AT BE CH DE FR GB IT LI LU NL SE**

(71) Applicant: **MACHINEFABRIEK G.J. NIJHUIS B.V.**
**Parallelweg 4 Postbus 102**
**NL-7100 AC Winterswijk(NL)**

(72) Inventor: **Nijhuis, Gerrit Jan**
**Rusthuisstraat 10**
**NL-7101 JH Winterswijk(NL)**

(74) Representative: **van der Beek, George Frans et al,**
**Nederlandsch Octrooibureau Johan de Wittlaan 15 P.O.**
**Box 29720**
**NL-2502 LS 's-Gravenhage(NL)**

(54) **Process and device for the disinfection of a carcase.**

(57) Process and apparatus for the disinfection of a carcase by means of sprayers (21) which move first up and then down the vertically suspended carcase, (24) which sprayers surround the carcase and during the upward movement wet the carcase and during the subsequent downward movement generate a downward flow washing away the bacteria, the sprayers preferably being downwardly directed at an angle to the carcase during the downward flushing part of the process.

./...

EP 0 181 046 A1

fig-2

1

Process and device for the disinfection of a carcase

The invention relates to a process for the disinfection of a carcase by means of sprayers which are pointed at the carcase and spray water with an added disinfectant on to it.

In abattoirs one is constantly faced with the problem that carcases after skinning or carcases which have been dehaired by scalding or some other method exhibit bacterial growth again on the surface. This is due, on the one hand, to the fact that the bacteria could not be sufficiently removed or that the carcase comes into contact with the skin during the removal thereof and, on the other, to the fact that the carcases are contaminated with bacteria present in the fat and protein residues which have been left behind in, for example, the cleaning and polishing equipment.

It is therefore known to spray off the carcases, and this must be carried out in time, otherwise the bacteria will lodge in the tissues and will then be difficult to remove, resulting in the tissues being attacked. A disinfectant such as lactic acid can be added to the spraying agent, such as water.

This spraying off can be carried out in practice with a hand-held shower, which is inaccurate. A device is also known where the carcases, suspended from the conveyor belt and moved along at constant speed, are conveyed between successive vertical rows of sprayers which are placed one above the other and can swing to and fro about a vertical shaft. Here again the problem is, however, ~that through the force of the jets the bacteria are not loosened and removed, but tend to be pressed more firmly into the

0181046

tissue.

The object of the invention is therefore to produce a simple process and device with which these problems do not occur.

This is achieved in the first instance in that, after being sprayed wet over its entire length, the carcase is then sprayed off while wet in a movement from top to bottom. Through the wetting, the bacteria present on the surface of the carcase after the contamination are loosened, and when spraying subsequently takes place in a top to bottom movement, the bacteria will be flushed away by the downward flow of liquid occurring.

It is preferable, at least for the downward movement, to point the liquid jets at an angle downwards towards the carcase, as a result of which the loosened bacteria are, as it were, peeled from the surface. This angle is preferably 60 degrees relative to the horizontal.

The device for application of the process according to the invention is in its simplest form characterised by the sprayers being placed in a circular element which can be moved up and down vertically and can also be moved to and fro in the direction of conveyance, and which at least moves forward at the same speed as the speed of conveyance. The upgoing movement can then serve to wet the carcase and the downgoing movement to remove the bacteria.

This device can consist of an annular element provided with sprayers, which is movable up and down in a frame which is displaceable horizontally. The element provided with sprayers can, however, also be disposed so that it is movable up and down on a column which pivots about a horizontal shaft which is vertical to the direction of conveyance.

In both cases it is preferable if the annular element provided with sprayers is in a plane which is at right angles to the vertical centre line of the frame or of the column, while it is also important that all sprayers of the annular element should be directed downwards at an angle.

In the embodiment in which the annular element provided with sprayers moves vertically in a horizontally displaceable frame which moves parallel to the direction of conveyance, the design is simple, but it is desirable that the moving back in a direction contrary to the direction of conveyance and necessary for treating the next carcase should take place more quickly, so that the sprayers are able to reach and treat the next carcase in time.

In the embodiment with the swinging column, there is the advantage that at the end of an operation in which during the swinging of the column in the direction of conveyance the sprayers first moved upwards and then moved downwards, the sprayers are in a position in which they need only cover a short distance for moving back.

The invention will now be explained in greater detail with reference to the drawings.

Fig. 1 shows a side view of a device according to the invention.
Fig. 2 shows a front view of the device of Fig. 1, and
Fig. 3 shows a top view of the device according to the invention.
Fig. 4 is a schematic drawing of another embodiment.

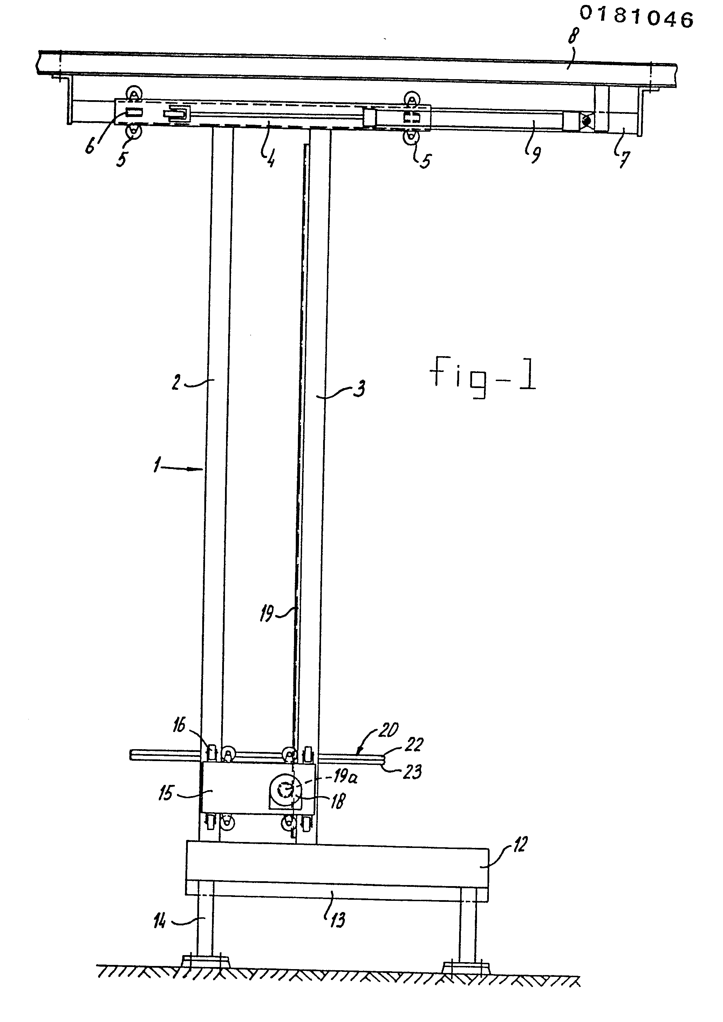

The device shown in Figs. 1 to 3 comprises a rectangular frame 1, consisting of two vertical parts 2 and 3, which are connected at the top end by a tubular section 4, which is longer than the distance between the parts 2 and 3, and which with rollers 5 and 6 is movably conducted on a fixed tubular section 7 suspended from a carrier bar 8. This frame 1 can be moved by means of a cylinder 9 for the to and fro movement.

The bottom end of the frame 1 is guided at 10 between plates 11 and 12, which are attached to the tubular section 13 which is fixed with supports 14 on the floor.

A carriage 15 is guided on parts 2 and 3 in the vertical direction by means of rollers 16 and 17. The carriage carries a motor 18 which with a pinion 19a engages with a toothed bar 19, as a result of which the carriage can move up and down along the frame.

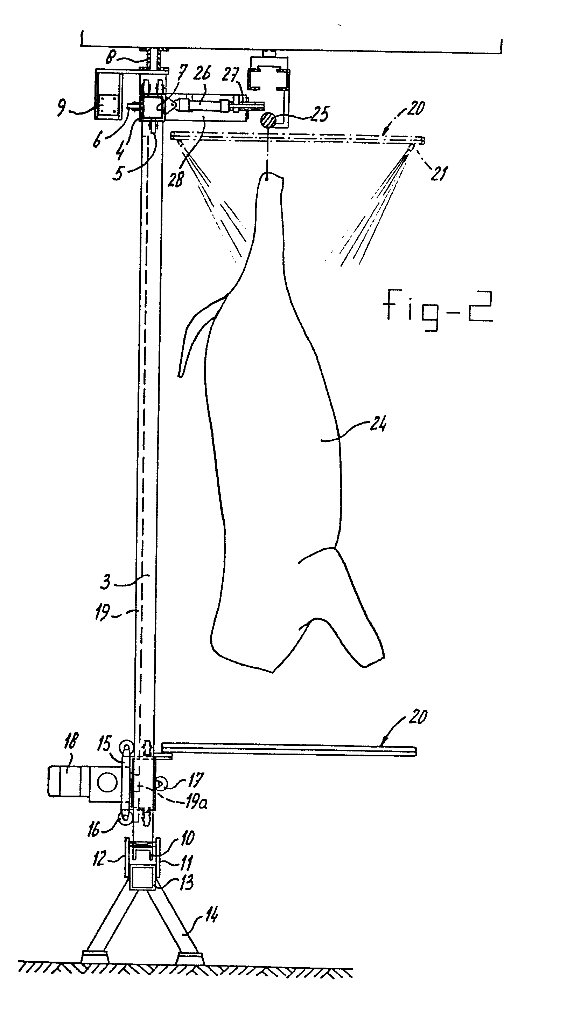

The frame also carries an annular tube 20 with sprayers 21 which, as shown in Fig. 2, spray downwards at an angle. As shown in Fig. 1, this ring can consist of two tubes 22, 23 lying on top of each other, with the bottom one serving to spray water and the top one, which is provided with separate sprayers, being used to spray lactic acid.

The carcase 24 to be treated is suspended from a rail 25 by means of a hook which is not shown.

Shown at 26 is a cylinder which is attached to the tubular bar 4 and which engages with a bolt 27 which slides in the crosswise direction and is conducted into a console 28, which is also attached to the tubular bar 4. This bolt 27 can be taken into the path of the hook, and the frame with the spraying device is thereby connected with the conveyor and thus moves in the direction of conveyance at the same speed. The cylinder 9 can then take care of the return positioning.

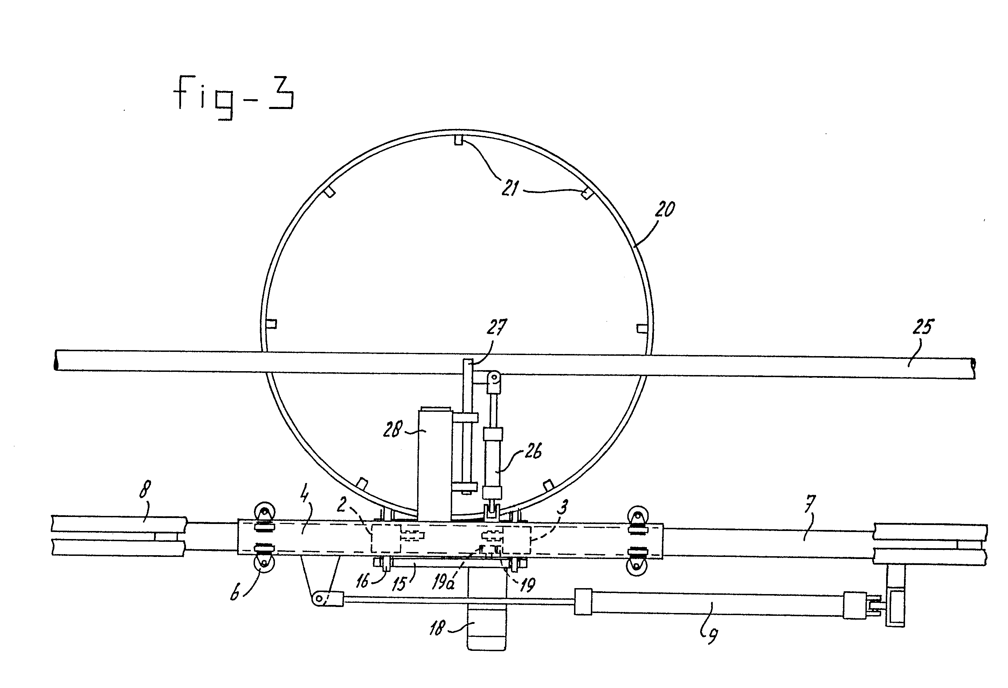

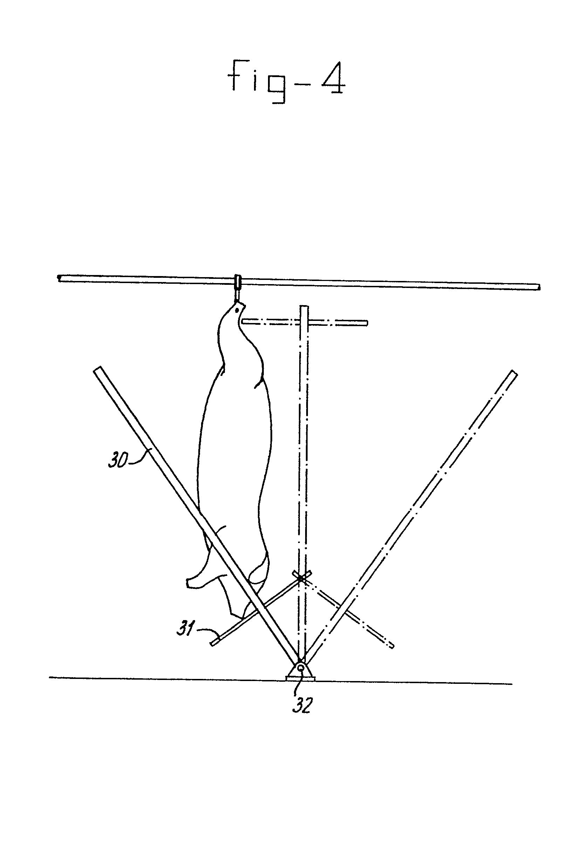

The device shown schematically in Fig. 4 shows a column 30 with an annular spray element 31 which moves in the longitudinal direction of the column. The column is hingedly connected at 32

0181046

and can swing between the initial position indicated by solid lines and the middle or end position indicated by dotted lines. During the swinging to the middle position the ring with spray elements moves to the top position and, on further swinging back, to the bottom position, which is indicated by dotted lines. The operation can take place again with a cylinder (not shown) which takes care of the outward or back movement.

It is clear from the drawing that during the swing back the ring with sprayers need only cover a short distance and then, provided that the ring with spray elements stand at right angles to the longitudinal axis of the column 30, is in a position which makes it easy for the bottom end of the carcase to enter the ring, while on completion of the swing movement the exit is easy.

## Claims

1. Process for the disinfection of a carcase by means of sprayers which are pointed at the carcase and spray water with an added disinfectant on to it, <u>characterised in that</u>, after being sprayed wet over its entire length, the carcase is then sprayed off while wet in a movement from top to bottom.

2. Process according to Claim 1, <u>characterised in that</u>, the wet spraying takes place by means of an upward movement of the sprayers.

3. Process according to Claim 1 or 2, <u>characterised in that</u>, at least during the downward movement the liquid jets are directed downwards at an angle on to the carcase.

4. Device for carrying out the process according to Claim 1, 2 or 3, consisting of a conveyor belt for continuous movement forward of carcases suspended thereon and a number of movable sprayers, <u>characterised in that</u> the sprayers are placed in a circular element which can be moved up and down vertically and can also be moved to and fro in the direction of conveyance, and which at least moves forward at the same speed as the speed of conveyance.

5. Device according to Claim 4, <u>characterised in that</u> the annular element provided with sprayers is conveyed in the vertical direction on a vertical frame which is movable horizontally.

6. Device according to Claim 4, <u>characterised in that</u> the sprayers are movable vertically on a column which pivots about a horizontal shaft which is vertical to the direction of conveyance.

7. Device according to Claim 4, 5 and 6, <u>characterised in that</u> the annular element provided with sprayers is in a plane which is

0181046

at right angles to the vertical longitudinal axis of the frame or
of the column.

8. Device according to Claim 4 to 7, <u>characterised</u> <u>in</u> <u>that</u> all
sprayers are directed downwards at an angle.

*****

0181046

Fig-1

fig-2

0181046

Fig-3

# fig-4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 268 566 (DUNCAN) <br> * Page 1, lines 1-18; page 2, lines 3-26 * | 1 | A 22 B 5/00 |
| Y | FR-A-2 524 769 (TOURNIER) <br> * Page 1, line 1 - page 2, line 24; page 5; figure 2 * | 1 | |
| A | | 4 | |
| A | EP-A-0 123 353 (NIJHUIS) <br> * Figures 1,5; page 5, lines 4-35; page 7, lines 18-36 * | 4-7 | |

TECHNICAL FIELDS
SEARCHED (Int. Cl.4)

A 01 K
A 22 B

The present search report has been drawn up for all claims

| Place of search | Date of completion of the search | Examiner |
|---|---|---|
| THE HAGUE | 03-02-1986 | VILBIG K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82